Europäisches Patentamt

European Patent Office

Office européen des brevets

(11) Veröffentlichungsnummer: **0 245 639 B1**

(12) **EUROPÄISCHE PATENTSCHRIFT**

(45) Veröffentlichungstag der Patentschrift: **19.06.91**

(51) Int. Cl.5: **C09D 167/06**, C09D 101/18

(21) Anmeldenummer: **87104751.0**

(22) Anmeldetag: **31.03.87**

(54) **Verfahren zur Herstellung von UV-gehärteten deckend pigmentierten Beschichtungen.**

(30) Priorität: **12.04.86 DE 3612442**

(43) Veröffentlichungstag der Anmeldung:
**19.11.87 Patentblatt 87/47**

(45) Bekanntmachung des Hinweises auf die
Patenterteilung:
**19.06.91 Patentblatt 91/25**

(84) Benannte Vertragsstaaten:
**AT DE ES FR GB IT NL SE**

(56) Entgegenhaltungen:
**DE-A- 2 436 614**
**US-A- 4 118 366**

(73) Patentinhaber: **BAYER AG**

**W-5090 Leverkusen 1 Bayerwerk(DE)**

(72) Erfinder: **Meixner, Jürgen, Dr.**
**Bethelstrasse 18**
**W-4150 Krefeld(DE)**
Erfinder: **Kremer, Wolfgang, Dipl.-Ing.**
**Lilienweg 6**
**W-4173 Kerken 2(DE)**
Erfinder: **Müller, Manfred, Dipl.-Ing.**
**Friedrich-Gelsamstrasse 34**
**W-5140 Erkelenz(DE)**

## Beschreibung

Die Erfindung betrifft ein Verfahren zur Herstellung von UV-gehärteten deckend pigmentierten Beschichtungen mit hoher Kratzfestigkeit und Lösungsmittelbeständigkeit auf Basis ungesättigter Polyester, die frei von copolymerisierbaren Monomeren (wie z.B. Styrol) sind. Das Verfahren eignet sich insbesondere zur Beschichtung von Holz, holzähnlichen Werkstoffen und Kunststoffolien.

Die Herstellung von UV-gehärteten deckend pigmentierten Beschichtungen hat seit jeher schwerwiegende Probleme aufgeworfen, die bislang nicht gelöst werden konnten, weil das deckende Pigment die UV-Strahlen nicht in tiefere Schichten vordringen läßt. Man hat deshalb Kompromisse angestrebt, die sich jedoch auf dem Markt nicht durchsetzen konnten. So ist bereits vorgeschlagen worden, UV-härtbaren ungesättigten Polyesterharzen unverträgliche Polymerisate zuzusetzen, um durch die aus dem unterschiedlichen Brechungsindices resultierende Opazität eine deckende Beschichtung vorzutäuschen (DE-OS 24 26 602), durch Einschluß von Mikroblasen in die Beschichtung einen deckenden Effekt zu erreichen (J. Paint Technol. 45, No. 584 (1973), 73) und

anstelle von Pigmenten Füllstoffe mit sehr geringem Deckvermögen zu verwenden und dadurch einen Durchtritt der UV-Strahlen in tiefere Schichten zu ermöglichen (DE-AS 16 21 820).

Die auf diese Weise erhältlichen Beschichtungen besitzen keine ausreichende Deckkraft oder ungenügende Elastizität. Ein weiteres Problem ist die oft unzureichende Lagerstabilität der Beschichtungsmittel.

Überraschenderweise wurde nun gefunden, daß Beschichtungsmittel auf Basis einer Kombination aus 1) sog. lufttrocknenden Polyestern, die frei von copolymerisierbaren Monomeren sind, und 2) Cellulosenitrat, gegebenenfalls gelöst in einem inerten organischen Lösungsmittel, zur Herstellung UV-gehärteter deckend pigmentierter Beschichtungen eingesetzt werden können, wenn man neben UV-Initiatoren zusätzlich Hydroperoxide verwendet. Solche Formulierungen können Standzeiten von ca, 5 Stunden bei Raumtemperatur aufweisen und nach einer Abdunstzeit von z.B. 2 bis 3 Minuten bei 50 bis 70°C direkt unter UV-Bestrahlung, z.B. mit Quecksilberdampf-Hochdruckstrahlern, ausgehärtet werden.

Gegenstand der Erfindung ist also ein Verfahren zur Herstellung UV-gehärteter deckend pigmentierter Beschichtungen, wonach man einen Polyesterlack aus

100 Gewichtsteilen lufttrocknendem Polyester,
0,1 bis 10, vorzugsweise 0,2 bis 4, Gewichtsteilen Cellulosenitrat,
0 bis 30 Gew.-%, bezogen auf Cellulosenitrat, Weichmacher für Cellulosenitrat,
10 bis 150 Gewichtsteilen Pigment,
1 bis 10 Gewichtsteilen Hydroperoxid als Initiator,
0,005 bis 1 Gewichtsteil Sikkativ,
0,5 bis 5 Gewichtsteilen Fotoinitiator und gegebenenfalls üblichen Zusätzen,

in einer Menge von 60 bis 150 g/m$^2$ auf das Substrat aufbringt, den Lacktilm 1 bis 5, vorzugsweise 2 bis 3 Minuten bei einer Temperatur von 50 bis 80, vorzugsweise von 60 bis 75°C, vorgeliert und dann unter UV-Bestrahlung aushärtet.

Bevorzugte lufttrocknende Polyester sind Polykondensationsprodukte mindestens einer $\alpha,\beta$-ethylenisch ungesättigten Dicarbonsäure mit in der Regel 4 oder 5 C-Atomen oder deren esterbildenden Derivaten (z.B. ihren Anhydriden), gegebenenfalls in Abmischung mit bis zu 200 Mol-%, bezogen auf die ungesättigte Säurekomponente, einer oder mehrerer aliphatischen gesättigten Dicarbonsäuren mit 4 bis 10 C-Atomen oder cycloaliphatischen oder aromatischen Dicarbonsäuren mit 8 bis 10 C-Atomen oder deren esterbildenden Derivaten (z.B. ihren Anhydriden), mit mindestens einer 3- oder höherwertigen Hydroxyverbindung mit 3 bis 8 C-Atomen, deren nicht zur Polykondensation eingesetzte OH-Gruppen mindestens teilweise mit $\beta,\gamma$-ethylenisch ungesättigten Alkoholen verethert sind, gegebenenfalls einer oder mehreren 2-wertigen Hydroxyverbindungen mit 2 bis 8 C-Atomen und gegebenenfalls einer oder mehreren 1-wertigen Hydroxyverbindungen mit 1 bis 18 C-Atomen - also Polyester, wie sie z.B. in der DE-AS 10 24 654, der DE-PS 22 21 335 und in Wagner/Sarx, "Lackkunstharze", 5. Aufl., Carl Hanser Verlag, München 1971, S. 140 beschrieben sind.

Beispiele für bevorzugt zu verwendende ungesättigte Dicarbonsäuren oder ihre Derivate sind Maleinsäure oder Maleinsäureanhydrid und Fumarsäure, Verwendet werden können z.B. jedoch auch Mesaconsäure, Citraconsäure, Itaconsäure oder Chlormaleinsäure. Beispiele für die zu verwendenden aliphatischen gesättigten und cycloaliphatischen und aromatischen Dicarbonsäuren oder ihre Derivate sind Phthalsäure und Phthalsäureanhydrid, Isophthalsäure, Terephthalsäure, Hexa- und Tetrahydrophthalsäure bzw. deren Anhydride, Endomethylentetrahydrophthalsäure, und deren Anhydrid, Bernsteinsäure bzw. Bernsteinsäureanhydrid und Bernsteinsäureester und -chloride, Adipinsäure, Sebacinsäure. Um schwer entflammbare Polyester herzustellen, können z.B. Hexachlorendomethylentetrahydrophthalsäure, Tetrachlorphthalsäure oder Tetrabromphthalsäure verwendet werden. Als zweiwertige Hydroxylverbindungen können Ethylenglykol, Propandiol-1,2, Propandiol-1,3, Diethylenglykol, Dipropylenglykol, Butandiol-1,3, Butandiol-1,4, Neopentylglykol, Hexandiol-1,6, 2,2-Bis(4-hydroxycyclohexyl)-propan, bis-oxalkyliertes Bisphenol A verwendet werden; zur Einführung der $\beta,\gamma$-ethylenisch ungesättigten Ethergruppen bevorzugte Hydroxyverbindungen sind Trimethylolpropanmono- und -diallylether, Glycerinmono- und -diallylether sowie Pentaerythritmono-, -di- und -triallylether geeignet. Die erfindungsgemäß zu verwendenden Polyester enthalten vorzugsweise mindestens 10 Gew.-%, insbesondere mindestens 20 Gew.-%, bezogen auf Polyester, Reste $\beta,\gamma$-ethylenisch ungesättigter Ethergruppen.

Für die Herstellung des Polyesters bevorzugte einwertige Hydroxyverbindungen sind Alkanole, Cycloalkanole und Cycloalkanalkanole, z.B. n-Hexanol, n-Octanol, n-Decanol, Laurol, Stearylalkohl, Hexahydrobenzylalkohol, vorzugsweise verzweigte Alkanole, wie 2-Ethylhexanol-1 und Isononanole.

Die Säurezahlen der Polyester sollen 1-40, vorzugsweise 10-30, die OH-Zahlen 10-100, vorzugsweise 20-50 und die als Zahlenmittel bestimmten Molekulargewichte 300-5000, vorzugsweise 500-2000, betragen.

Bevorzugte Cellulosenitrate sind üblichen Collodiumwollequalitäten, d.h. Cellulosesalpetersäureester mit einem Stickstoffgehalt von 10,2 bis 12,4 Gew.-%.

Dabei ist es für die Erfindung nicht wesentlich, ob es sich bei der verwendeten Collodiumwolle um eine Butanol-, Isopropanol-, Ethanol-, Methanol- oder Wasser-feuchte Form handelt oder ob celluloidartige Massen (allgemein Chips genannt), also mit gelatinierenden Weichmachern, verwandt werden.

Bevorzugte Weichmacher für Cellulosenitrate sind insbesondere Phthalsäure - und Adipinsäureester von Alkoholen mit 4 bis 8 Kohlenstoffatomen, z.B. dibutylphthalat, Diisobutylcarbinylphthalat, Dicyclohexylphthalat, Dioctylphthalat, Dibutylphthalat, Dioctyladipat, Phosphorsäureester von Alkoholen mit 6 bis 10 Kohlenstoffatomen, z.B. Trikresylphosphat, Triphenylphosphat, Trioctylphosphat, Kresylphenylphosphat, Dioctylphenylphosphat, aber auch Diethylenglykolmonolaurat, Dipentaerythrithexapropionat, 2-Methoxyethyl-acetyl-tributylaconitat, Butoxy-ethyldiglykol-carbonat, Acetyltributylcitrat, Triethylenglykol-pelargonat, Butyldiglykolcarbonat, Polyethylenglykol-di-2-ethyl-hexanoat, Triethylenglykol-di-2-ethylbutyrat, Tributylcarballylat, Dibutylsebacat und Benzolsulfonsäure-N-methylamid.

Als Pigmente können die für ungesättigte Polyesterlacke üblichen, deckenden, anorganischen oder organischen Pigmente wie Titandioxid, Ultramarinblau, Eisenoxide und Phthalocyaninblau eingesetzt werden.

Bevorzugte Hydroperoxide sind beispielsweise tert.-Butylhydroperoxid, Cumolhydroperoxid, Methlethylketonhydroperoxid, Diisopropylbenzol-monohydroperoxid, Wasserstoffperoxid.

Sikkative sind z.B. Eisen-, Blei-, Cobalt- und Mangansalze von Säuren wie Leinölfettsäuren, Tallölfettsäuren, Sojafettsäuren, von Harzsäuren wie Abietinsäure und Naphthensäure oder von Essigsäure oder Isooctansäure. Bevorzugt werden Cobaltoctoat, Cobaltnaphthenat und Cobaltacetat. Sikkative werden vorzugsweie in Form von organischen Lösungen eingesetzt.

Als Fotoinitiatoren sind die für die Strahlenhärtung hinlänglich bekannten Verbindungen geeignet, wie Ketone, Diketone, $\alpha$-Ketoalkohole und ihre Derivate. Bevorzugte Fotoinitiatioren sind Benzoin und seine Derivate, wie z.B. Benzoinether (DE-PS 16 94 149), Benzilketale und Hydroxyalkylphenone, z.B. Benzoinisopropylether, Benzildimethylketal, 2-Hydroxy-2-methyl-1-phenyl-propan-1-on und 1-Hydroxycyclohexyl-phenyl-keton.

Gegebenenfalls zu verwendende übliche Zusätze sind beispielsweise Füllstoffe, Thixotropier-, Glätt-, Mattierungs-und Verlaufmittel sowie organische Lösungsmittel, wie z.B. Toluol, Xylol, Isopropanol, insbesondere Butylacetat. Die Menge der organischen Lösungsmittel wird im allgemeinen so gewählt, daß die Lacke eine geeignete Verarbeitungsviskosität aufweisen.

Die Lacke eignen sich hervorragend zur Verarbeitung auf den herkömmlichen, mit Gießmaschinen ausgerüsteten Lackierstraßen. Weiter sind sie durch Walzen und Spritzen applizierbar.

Die Prozentangaben der nachfolgenden Beispiele bedeuten Gewichtsprozente, Teile sind Gewichtsteile.


Beispiele


Verwendeter Polyester


Ungesättigter Polyester mit einer Säurezahl von 25, einer OH-Zahl von 75 und einer Viskosität von 6000 mPa.s, gemessen an einer 80 % igen Lösung in Butylacetat bei 20°C, hergestellt aus 1 Mol Maleinsäureanhydrid, 0,85 Mol Ethylenglykol, 0,15 Mol Propylenglykol und 0,3 Mol Trimethylolpropandiallylether.

Die in der Tabelle aufgeführten Formulierungen *) wurden in einer Menge von 90 g/m² auf einem auf 40°C vorgewärmten Holzuntergrund aufgegossen. Zum Abdunsten des Lösungsmittels wurde 3 Minuten auf 70°C erwärmt. Der Lackfilm wurde anschließend unter UV-Bestrahlung (2 Quecksilberdampf-Hochdruckstrahler mit je 80 Watt/cm, Strahlerabstand von Lack 20 cm, Verarbeitungsgeschwindigkeit 3,5 m/Minute) gehärtet. Die Beispiele 1-3 ergaben farblose, einwandfrei wasser- und chemikalienfeste, harte und kratzfeste Lackierungen, während das Vergleichsbeispiel zu einer gerunzelten, nicht kratzfesten Lackierung führte.

**Tabelle**

| | Beispiele 1 | 2 | 3 | Vergleich |
|---|---|---|---|---|
| 80 %ige Lösung des Polyesters in Butylacetat | 34 | 34 | 34 | 34 |
| 2,5 %ige Lösung von Nitrocellulose-wolle in Butylacetat | 13 | 13 | 13 | – |
| Titandioxid (Rutiltyp) | 17 | 17 | 28 | 17 |
| Bariumsulfat | 11 | 11 | – | 11 |
| Xylol | 14 | 14 | 14 | 8 |
| Butylacetat | 9 | 9 | 9 | 11 |
| 2-Hydroxy-2-methyl-1-phenyl-propan-1-on | 0,7 | – | 0,7 | 0,7 |
| 1-Hydroxycyclohexyl-phenyl-keton | – | 0,7 | – | – |
| Co-octoat-Lösung in Xylol (2 % Metallgehalt) | 0,6 | 0,6 | 0,6 | 0,6 |
| 50 %ige Dispersion von Cyclohexanon-hydroperoxid in Dibutylphthalat | 0,5 | 0,5 | 0,5 | 0,5 |
| Standzeit (Stunden) | 6-8 | 6-8 | 6-8 | 1 |

*) Viskosität nach DIN 53 211 (DIN-Becher Nr. 4 bei 20°C) entsprechend einer Auslaufzeit von 60 sec

EP 0 245 639 B1

## Ansprüche

1. Verfahren zur Herstellung UV-gehärterter deckend pigmentierter Beschichtungen, wonach man einen Polyesterlack aus

100 Gewichtsteilen lufttrocknendem Polyester,
0,1 bis 10 Gewichtsteilen Cellulosenitrat,
0 bis 30 Gew.-%, bezogen auf Cellulosenitrat, Weichmacher für Cellulosenitrat,
10 bis 150 Gewichtsteilen Pigment,
1 bis 10 Gewichtsteilen Hydroperoxid als Initiator,
0,005 bis 1 Gewichtsteil Sikkativ,
0,5 bis 5 Gewichtsteilen Fotoinitiator und gegebenenfalls üblichen Zusätzen,

in einer Menge von 60 bis 150 g/m$^2$ auf das Substat aufbringt, den Lackfilm 1 bis 5 Minuten bei einer Temperatur von 50 bis 80° C vorgeliert und dann unter UV-Bestahlung aushärtet.

2. Verfahren nach Anspruch 1, wonach der Polyesterlack 0,2 bis 4 Gewichtsteile Cellulosenitrat pro 100 Gewichtsteile Polyester enthält.

3. Verfahren nach Ansprüchen 1 und 2, wonach man den Lackfilm 2 bis 3 Minuten vorgeliert.

4. Verfahren nach Ansprüchen 1-3, wonach man den Lackfilm bei 60 bis 75° C vorgeliert.

## Claims

1. A process for the production of UV-cured, opaquely pigmented coatings, in which a polyester paint of

```
100          parts by weight air-drying polyester,
0.1   to 10  parts by weight cellulose nitrate,
0     to 30% by weight, based on cellulose nitrate, of a
             plasticizer for cellulose nitrate,
10    to 150 parts by weight pigment,
1     to 10  parts by weight hydroperoxide as initiator,
0.005 to 1   part  by weight siccative,
0.5   to 5   parts by weight photoinitiator and, option-
             ally, standard additives
```

is applied to the substrate in a quantity of 60 to 150 g/m$^2$, the paint film is pregelled for 1 to 5 minutes at a temperature of 50 to 80° C and is then cured by UV irradiation.

2. A process as claimed in claim 1, in which the polyester paint contains 0.2 to 4 parts by weight cellulose nitrate per 100 parts by weight polyester.

3. A process as claimed in claims 1 and 2, in which the paint film is pregelled for 2 to 3 minutes.

4. A process as claimed in claims 1 to 3, in which the paint film is pregelled at 60 to 75° C.

## Revendications

1. Procédé pour l'application de revêtements pigmentés couvrants, durcis aux UV, dans lequel on applique sur le support, en quantité de 60 à 150 g/m$^2$, une peinture de polyester consistant en 100 parties en poids d'un polyester séchant à l'air,

5

0,1 à 10 parties en poids de nitrate de cellulose,

0 à 30 % en poids, par raport au nitrate de cellulose, de plastifiant pour cet ester,

10 à 150 parties en poids de pigment,

1 à 10 parties en poids d'un hydroperoxyde servant d'inducteur,

0,005 à 1 parties en poids de siccatif,

0,5 à 5 parties en poids d'un photo-inducteurs et le cas échéant des additifs usuels,

on soumet la pellicule de peinture à gélification préalable en 1 à 5 min à une température de 50 à 80°C, puis on procède au durcissement final par exposition aux UV.

2. Procédé selon la revendication 1, dans lequel la peinture de polyester contient 0,2 à 4 parties en poids de nitrate de cellulose pour 100 parties en poids du polyester.

3. Procédé selon les revendications 1 et 2, dans lequel on soumet la pellicule de peinture à gélification préalable en 2 à 3 min.

4. Procédé selon les revendications 1 à 3, dans lequel on soumet la pellicule de peinture à gélification préalable à une température de 60 à 75°C.